# EUROPÄISCHE PATENTSCHRIFT

(11) **EP 3 584 504 B1**
(45) Veröffentlichungstag und Bekanntmachung des Hinweises auf die Patenterteilung: **07.06.2023**
(21) Anmeldenummer: 19177566.7
(22) Anmeldetag: 31.05.2019
(51) Int. Cl.: F24D 3/02, F24D 19/10, G05D 23/00

(54) **HEIZUNGSSYSTEM ZUR KOPPLUNG EINER EINZELRAUMREGELUNG MIT EINEM HEIZGERÄT**
HEATING SYSTEM FOR COUPLING OF AN INDIVIDUAL ROOM CONTROL SYSTEM WITH A HEATING DEVICE
SYSTÈME DE CHAUFFAGE POUR ACCOUPLEMENT D'UNE RÉGULATION D'ESPACE INDIVIDUELLE DOTÉE D'UN APPAREIL DE CHAUFFAGE

(30) Priorität: 12.06.2018 DE 102018113969
(43) Veröffentlichungstag der Anmeldung: 25.12.2019
(73) Patentinhaber: Vaillant GmbH, 42859 Remscheid (DE)
(72) Erfinder: Stevens, Torsten, 47807 Krefeld (DE); Littek, Jörg, 44268 Herne (DE)
(74) Vertreter: Popp, Carsten

(56) Entgegenhaltungen:
- EP-A1- 3 059 652
- EP-A2- 2 905 671
- WO-A1-2011/153572
- DE-A1- 4 203 613
- DE-A1-102010 055 080
- DE-U1-202011 110 079
- DE-U1-202015 103 564

## Beschreibung

Die Erfindung bezieht sich auf die Kopplung von Einzelraumregelungen mit einem Heizgerät.

Einzelraumregelungssysteme gemäß dem Stand der Technik arbeiten autark. Sie messen die Raumtemperatur und öffnen beziehungsweise schließen ein Heizkörperventil für die Warmwasserzufuhr im Heizkörper elektronisch. Eine Kopplung mit dem Heizgerät findet nicht statt.

Hieraus ergibt sich das Problem, dass bei einer Wärmeanforderung das Heizkörperventil maximal vollständig geöffnet werden kann. Ist die Vorlauftemperatur zu gering, wird der Raum nicht ausreichend oder zu langsam warm, was zumindest den Komfort maßgeblich beeinflusst. In einem Gebäude gibt es größere und kleinere Räume mit unterschiedlicher Dämmung und Luftumsatz. So kann eine bestimmte Vorlauftemperatur zwar für bestimmte Räume ausreichend, für andere jedoch unzureichend sein.

Andere Regelsysteme sehen vor, dass die Temperatur in einem Raum gemessen und entsprechend dessen Vorgabe das Heizgerät betrieben wird. Hierbei blieben die Heizkörperthermostate zumeist unverändert geöffnet. In der Regel wird die Temperatur des Wohnzimmers geregelt, während die anderen Räume diesem folgen. In einem Schlafzimmer, welches in der Regel kühler ist, kann dann mittels eines Heizkörperventils die Wärmezufuhr weiter gedrosselt werden.

Die Gebrauchsmusterschrift DE 20 2015 103564 U1 offenbart ein Temperaturregelungssystem mit einem Steuergerät und einem oder mehreren Regeleinheiten, die mittelbar und/oder unmittelbar wenigstens eine Wärmequelle (z.B.

Heizkörper oder Heizkessel) regeln. Das Steuergerät und die Regeleieinheiten sind über eine Schnittstelle, z.B. Funk, miteinander verbunden.

In der Gebrauchsmusterschrift DE 20 2011 110079 U1 ist ein Steuerungssystem zur Ansteuerung zumindest eines Thermostatventils eines Heizkörpers beschrieben. Eine Signalgebereinrichtung für das Thermostatventil empfängt kabellos Steuersignale von zumindest einer Signalgebereinrichtung. Die Signalgebereinrichtung kann beispielsweise ein geöffnetes Fenster detektieren.

Die Patentanmeldung DE 10 2010 055080 A1 zeigt ein Verfahren zur Optimierung der Vorlaufsolltemperatur einer Heizung für mehrere Räume. Anhand der Differenz zwischen Soll- und Isttemperatur der Räume wird die Wärmeleistung berechnet und die Vorlaufsolltemperatur eingestellt. Die Öffnung jedes Heizungsregelventils wird eingestellt.

Eine weitere gattungsgemäße Patentanmeldung stellt die EP3059652A1 dar.

Aufgabe der Erfindung ist daher, eine Verbindung mehrerer Einzelraumregelungen mit einer Heizung zu schaffen, welche allen Räumen eines Gebäudeobjekts gerecht wird.

Erfindungsgemäß wird dies dadurch gelöst, dass die Vorlauftemperatur so bedarfsgerecht an die Soll- und Ist-Temperaturen der Einzelräume angepasst wird, dass für jeden Raum das Heizungssystem bedarfsgerecht angepasst werden kann.

Vorteilhafte Ausgestaltungen ergeben sich aus den Merkmalen des abhängigen Anspruchs.

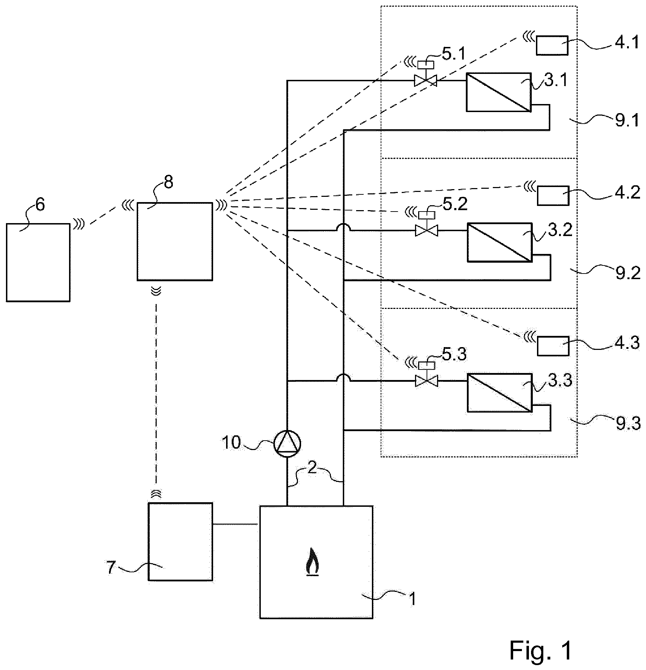

Die Erfindung wird anhand der Figur 1 näher erläutert.

Die Figur 1 zeigt ein Heizungssystem mit einem Heizgerät 1, welches über eine Heizungsregelung 7 verfügt; diese kann in dem Gerät integriert sein. Die Heizungsregelung 7 ist mit einem Gateway 8 verbunden. An dem Heizgerät 1 ist ein Heizungskreislauf 2 mit Umwälzpumpe 10 angeschlossen. In drei Räumen 9.1, 9.2, 9.3 (gestrichelte Umrandung) befinden sich jeweils eine regelbare Wärmesenke 3.1, 3.2, 3.3 in Form eines Heizkörpers mit Stellgliedern 5.1, 5.2, 5.3 in Form von Heizkörperventilen. Ferner befinden sich in den Räumen jeweils Temperaturfühler und Sollwertgeber; diese sind im vorliegenden Fall in einer Baueinheit als Raumregler 4.1, 4.2, 4.3 kombiniert; optional können sie auch getrennt sein. Alle Raumregler 4.1, 4.2, 4.3 (Temperaturfühler mit Sollwertgeber), und Stellglieder 5.1, 5.2, 5.3 sind über das Gateway 8 drahtlos mit der Heizungsregelung 7 verbunden. Ein Mobiltelefon 6, Personal-Computer oder Tablet ist ebenfalls mit dem Gateway 8 verbunden. Das Gateway 8 verbindet die Sensoren, Aktoren, Vorgabe- und Anzeigeeinrichtungen mit der Heizungsregelung 7.

Beim Betrieb der Heizungsanlage werden zunächst die Heizungsregelung 7, die Stellglieder 5.1, 5.2, 5.3, die Raumregler 4.1, 4.2, 4.3 (Temperaturfühler und die Sollwertgeber in einer Baueinheit) und das Mobiltelefon 6 mit dem Gateway 8 verbunden. Mittels der drei Raumregler 4.1, 4.2, 4.3 werden für die drei Räume 9.1, 9.2, 9.3 Solltemperaturen T_{S1}, T_{S2}, T_{S3} vorgeben und Ist-Temperaturen T_{I1}, T_{I2}, T_{I3} erfasst. Ist in zumindest einem der drei Räume 9.1, 9.2, 9.3 die Ist-Temperatur T_{I1}, T_{I2}, T_{I3} geringer als die Solltemperatur T_{S1}, T_{S2}, T_{S3}, so sendet der korrespondierende Raumregler 4.1, 4.2, 4.3 ein entsprechendes Signal an das Gateway 8, welches wiederum das Signal an die Heizungsregelung 7 weitergibt. Liegen von mindestens zwei Raumreglern 4.1, 4.2, 4.3 auf eine Wärmeanforderung hinweisende Signale vor, so wird die höchste Solltemperatur T_{S1}, T_{S2}, T_{S3} von der Heizungsregelung 7 als Solltemperatur T_{S} für den Regelalgorithmus verwendet; das Heizgerät 1 erhitzt je nach verwendeter Heizkurve / Algorithmus das Heizungswasser auf eine bestimmte Vorlauftemperatur Tv. Alle Wärmesenke 3.1, 3.2, 3.3 werden mit diesem Heizungswasser angeströmt. Die Stellglieder 5.1, 5.2, 5.3 an den Wärmesenken 3.1, 3.2, 3.3 regeln den Durchfluss durch die Wärmesenken 3.1, 3.2, 3.3, so dass sich in den Räumen 9.1, 9.2, 9.3 mit Wärmebedarf die korrespondierenden Solltemperaturen T_{S1}, T_{S2}, T_{S3} einstellen. In Räumen 9.1, 9.2, 9.3, in denen die Solltemperatur T_{S1}, T_{S2}, T_{S3} nicht größer als die korrespondierende Ist-Temperatur T_{I1}, T_{I2}, T_{I3} ist, bleiben die Stellglieder 5.1, 5.2, 5.3 geschlossen.

Das Wort "korrespondierend" bedeutet, dass die Elemente einem bestimmten Raum beziehungsweise Einheit zugeordnet sind. So soll im ersten Raum 9.1 die regelbare Wärmesenke 3.1 mit dem Stellglied 5.1 und dem Raumregler 4.1 installiert sein. Die korrespondierende Solltemperatur ist Ts, und die korrespondierende Ist-Temperaturen T_{I1}.

Mittels einer entsprechenden App auf dem Mobiltelefon 6 kann individuell die Solltemperatur T_{S1}, T_{S2}, T_{S3}, in den Räumen 9.1, 9.2, 9.3 eingestellt werden. Diese kann optional auf einem Display der Raumregler 4.1, 4.2, 4.3 angezeigt werden.

Sowohl mittels der App auf dem Mobiltelefon 6, als auch an den Raumreglern 4.1, 4.2, 4.3 lassen sich individuelle Zeitprofile einstellen, mit denen bestimmt wird, in welchen Räumen 9.1, 9.2, 9.3 zu welchen Zeiten welche Solltemperaturen T_{S1}, T_{S2}, T_{S3} gelten.

Optional könnte die Verbindung auch direkt zwischen den Raumreglern 4.1, 4.2, 4.3, Stellgliedern 5.1, 5.2, 5.3, Mobiltelefon 6 und der Heizungsregelung 7 erfolgen.

Die Sollwertgeber und / oder Temperaturfühler können optional auch mit den Stellgliedern 5.1, 5.2, 5.3 eine Baueinheit bilden. Es gibt hierzu Heizkörperventile, welche über eine Temperaturvorgabe und / oder Raumtemperaturerfassung verfügen.

Optional können mit dem Heizgerät 1 weitere Wärmesenken, welche nicht über vorgenannte Regeleinrichtung verfügen, verbunden sein. Diese verfügen optional über ein einfaches mechanisches Thermostatventil. Diese Wärmesenken werden mit den Betriebsparametern des Heizungskreislaufs 2 bedient, welche eine regelbare Wärmesenke 3.1, 3.2, 3.3 vorgibt.

Des Weiteren kann mit dem Heizungssystem ein Belüftungssystem kombiniert sein. Hierzu kann es in den einzelnen Räumen 9.1, 9.2, 9.3 jeweils Frischluftzuführungen sowie optional Sensoren zur Bestimmung der Luftqualität geben. Ist in einem Raum die Lufttemperatur zu hoch und es steht kältere Frischluft zur Verfügung, so kann diesem Raum Frischluft zur Kühlung zugeführt werden. Ist der CO₂-Gehalt in einem Raum zu hoch, so kann ebenfalls diesem Raum Frischluft zugeführt werden bis die Luftqualität wieder einer vorgegebenen Mindestanforderung entspricht.

### Bezugszeichenliste

1 Heizgerät
2 Heizungskreislauf
3.1 erste Wärmesenke
3.2 zweite Wärmesenke
3.3 dritte Wärmesenke
4.1 erster Raumregler
4.2 zweiter Raumregler
4.3 dritter Raumregler
5.1 erstes Stellglied
5.2 zweites Stellglied
5.3 drittes Stellglied
6 Mobiltelefon
7 Heizungsregelung
8 Gateway
9.1 erster Raum
9.2 zweiter Raum
9.3 dritter Raum
10 Umwälzpumpe

## Patentansprüche

1. Verfahren zum Betreiben eines Heizungssystems mit einem Heizgerät (1), einer Heizungsregelung (7) und mindestens zwei regelbaren Wärmesenken (3.1, 3.2, 3.3), wobei jeder regelbaren Wärmesenke (3.1, 3.2, 3.3) ein Temperaturfühler (4.1, 4.2, 4.3), ein Stellglied (5.1, 5.2, 5.3) und ein Sollwertgeber (6, 4.1, 4.2, 4.3, 5.1, 5.2, 5.3) zugeordnet ist, wobei alle Temperaturfühler (4.1, 4.2, 4.3), Stellglieder (5.1, 5.2, 5.3) und Sollwertgeber (6, 4.1, 4.2, 4.3, 5.1, 5.2, 5.3) mit der Heizungsregelung (7) verbindbar sind, wobei die Heizungsregelung (7) mit den Temperaturfühlern (4.1, 4.2, 4.3), Stellgliedern (5.1, 5.2, 5.3) und Sollwertgebern (6, 4.1, 4.2, 4.3, 5.1, 5.2, 5.3) verbunden wird, mittels mindestens eines Sollwertgebers (6, 4.1, 4.2, 4.3, 5.1, 5.2, 5.3) Solltemperaturen ( T_{S1}, T_{S2}, T_{S3} ) vorgeben werden, mittels mindestens eines korrespondierenden Temperaturfühler (4.1, 4.2, 4.3) Ist-Temperaturen ( T_{I1}, T_{I2}, T_{I3} ) erfasst werden, in den Räumen (9.1, 9.2, 9.3), in denen die Solltemperatur ( T_{S1}, T_{S2}, T_{S3} ) größer als die korrespondierende Ist-Temperatur ( T_{I1}, T_{I2}, T_{I3} ) ist, mittels der Stellglieder (5.1, 5.2, 5.3) an den Wärmesenken (3.1, 3.2, 3.3) die Temperaturen in diesen Räumen (9.1, 9.2, 9.3) auf die korrespondierenden Solltemperaturen (T_{S1}, T_{S2}, T_{S3}) eingeregelt werden, **dadurch gekennzeichnet, dass**
in dem Fall, in dem zumindest eine Ist-Temperatur ( T_{I1}, T_{I2}, T_{I3} ) geringer als die korrespondierende Solltemperatur ( T_{S1}, T_{S2}, T_{S3} ) ist, ein entsprechendes Signal an die Heizungsregelung (7) gesendet wird, wenn mindestens zwei derartige Signale vorliegen, die höchste korrespondierende Solltemperatur ( T_{S1}, T_{S2}, T_{S3}) von der Heizungsregelung (7) als Solltemperatur (T_{S}) für den Regelalgorithmus verwendet wird und das Heizgerät (1) entsprechend dieser Solltemperatur (T_{S}) betrieben wird..

2. Verfahren zum Betreiben eines Heizungssystems nach Anspruch 1, **dadurch gekennzeichnet, dass** mit dem Heizungssystem ein Belüftungssystem verbunden ist, mittels dem den Räumen (9.1, 9.2, 9.3) Frischluft zugeführt werden kann.

## Claims

1. Method for operating a heating system comprising a heating device (1), a heating control system (7) and at least two controllable heat sinks (3.1, 3.2, 3.3), wherein each controllable heat sink (3.1, 3.2, 3.3) is assigned a temperature sensor (4.1, 4.2, 4.3), an actuator (5.1, 5.2, 5.3) and a setpoint generator (6, 4.1, 4.2, 4.3, 5.1, 5.2, 5.3), wherein all temperature sensors (4.1, 4.2, 5.3), actuators (5.1, 4.2, 5.3) and setpoint generators (6, 4.1, 4.2, 4.3, 5.1, 5.2, 5.3) can be connected to the heating control system (7), wherein the heating control system is connected to the temperature sensors (4.1, 4.2, 4.3), actuators (5.1, 5.2, 5.3) and setpoint generators (6, 4.1, 4.2, 4.3, 5.1, 5.2, 5.3), setpoint temperatures ( T_{S1}, T_{S2}, T_{S3}) are specified by means of at least one setpoint generator (6, 4.1, 4.2, 4.3, 5.1, 5.2, 5.3), actual temperatures (T_{I1}, T_{I2}, T_{I3}) are recorded by means of at least one corresponding temperature sensor (4.1, 4.2, 4.3), in the rooms (9.1, 9.2, 9. 3) in which the setpoint temperature (T_{S1}, T_{S2}, T_{S3}) is greater than the corresponding actual temperature T_{I1}, T_{I2}, T_{I3}, the temperatures in these rooms (9.1, 9.2, 9.3) are adjusted to the corresponding setpoint temperatures (T_{S1}, T_{S2}, T_{S3}) by means of the actuators (5.1, 5.2, 5.3) at the heat sinks (3.1, 3.2, 3.3),
**characterised in that**
in the event that at least one actual temperature (T_{I1}, T_{I2}, T_{I3}) is lower than the corresponding setpoint temperature (T_{S1}, T_{S2}, T_{S3}), a corresponding signal is sent to the heating control system (7),
if at least two such signals are present, the highest corresponding setpoint temperature (T_{S1}, T_{S2}, T_{S3}) is used by the heating control system (7) as the setpoint temperature (T_{S}) for the control algorithm and the heating device (1) is operated in accordance with this setpoint temperature.

2. Method for operating a heating system according to claim 1, **characterised in that** a ventilation system is connected to the heating system, by means of which the rooms (9.1, 9.2, 9.3) can be supplied with fresh air.

## Revendications

1. Procédé de fonctionnement d'un système de chauffage avec un appareil de chauffage (1), une régulation de chauffage (7) et au moins deux dissipateurs de chaleur (3.1, 3.2, 3.3) régulables, dans lequel à chaque dissipateur de chaleur (3.1, 3.2, 3.3) régulable sont associés un capteur de température (4.1,4.2, 4.3), un organe de réglage (5.1, 5.2, 5.3) et un générateur de valeur de consigne (6, 4.1, 4.2, 4.3, 5.1, 5.2, 5.3), dans lequel tous les capteurs de température (4.1, 4.2, 4.3), organes de réglage (5.1, 5.2, 5.3) et générateurs de valeur de consigne (6, 4.1, 4.2, 4.3, 5.1, 5.2, 5.3) peuvent être reliés à la régulation de chauffage (7), dans lequel la régulation de chauffage est reliée aux capteurs de température (4.1, 4.2, 4.3), organes de réglage (5.1, 5.2, 5.3) et générateurs de valeur de consigne (6, 4.1, 4.2, 4.3, 5.1, 5.2, 5.3), des températures de consigne (T_{S1}, T_{S2}, T_{S3}) sont prédéfinies au moyen d'au moins un générateur de valeur de consigne (6, 4.1, 4.2, 4.3, 5.1, 5.2, 5.3), des températures réelles (T_{I1}, T_{I2}, T_{I3}) sont détectées au moyen d'au moins un capteur de température (4.1, 4.2, 4.3) correspondant, dans les espaces (9.1, 9.2, 9.3), dans lesquels la température de consigne (T_{S1}, T_{S2}, T_{S3}) est supérieure à la température réelle correspondante (T_{I1}, T_{I2}, T_{I3}), au moyen des organes de réglage (5.1, 5.2, 5.3) au niveau des dissipateurs de chaleur (3.1, 3.2, 3.3), les températures sont régulées dans ces espaces (9.1, 9.2, 9.3) aux températures de consigne correspondantes (T_{S1}, T_{S2}, T_{S3}),
**caractérisé en ce que**
dans le cas où au moins une température réelle (T_{I1}, T_{I2}, T_{I3}) est inférieure à la température de consigne correspondante (T_{S1}, T_{S2}, Tss), un signal correspondant est envoyé à la régulation de chauffage (7),
lorsqu'au moins deux signaux de la sorte se présentent, la température de consigne correspondante la plus élevée (T_{S1}, T_{S2}, T_{S3}) est utilisée par la régulation de chauffage (7) comme température de consigne (T_{S}) pour l'algorithme de régulation et l'appareil de chauffage (1) fonctionne selon cette température de consigne.

2. Procédé de fonctionnement d'un système de chauffage selon la revendication 1, **caractérisé en ce qu'**un système de ventilation est relié au système de chauffage, au moyen duquel de l'air frais peut être fourni aux espaces (9.1, 9.2, 9.3).
